# EUROPEAN PATENT APPLICATION

(11) **EP 1 324 631 A2**
(43) Date of publication of application: **02.07.2003**
(21) Application number: 02293214.9
(22) Date of filing: 23.12.2002
(51) Int. Cl.: H04Q 11/04, H04L 12/56

(54) **Combined use timer system for data communication**

(30) Priority: 27.12.2001 US 26860
(71) Applicant: Alcatel Canada Inc., Ottawa, Ontario K2K 2E6 (CA)
(72) Inventor: Nielsen, Christopher John, Vancouver, British Columbia V6E 2C8 (CA); Froese, Edwin Lloyd, Burnaby, British Columbia V3J 7L1 (CA)
(74) Representative: Feray, Valérie

(57) **Abstract**

A combined use CU timer system establishes expiry times by which partially filled cells in each of a number of data streams should be transmitted. A record is kept of groups of one or more data streams which share the same expiry time. Upon the expiry time for a group of data streams being reached the partially- filled cells for the data streams in the group are sent. The invention facilitates tracking expiry times for a large number of data streams. Implementations of the invention may be used in sending AAL2 packets over ATM links according to the I.363.2 standard.

## Description

This invention relates to telecommunication equipment. The invention has application in asynchronous transfer mode (ATM) devices. The invention relates specifically to combined use timers which may be used in combining data into the cells of an ATM connection.

An ATM connection transmits fixed- length data cells over a physical data link. The physical data link typically comprises a fiber optic cable or an electrical cable. The ATM link is typically divided up into a number of virtual connections. In various situations it is desirable to combine data belonging to one or more channels into one ATM virtual connection which has sufficient bandwidth to service all of the channels. The ATM link is a step in carrying the stream of data from a source to an ultimate destination.

Within each ATM virtual connection data is carried as a payload in ATM cells. In general, the data in each channel may arrive in packets which are not the same size as the data payload of an ATM cell and may not be an even multiple of the size of the ATM cell data payload. Further, in some cases, packets of data may arrive for transmission across an ATM link in a bursty manner. To conserve bandwidth in the ATM link, some protocols permit delaying the transmission of a partially filled ATM cell until more data arrives from which the partially filled cell can be filled and then sent.

In many applications it is necessary to keep the latency (i.e. the time taken for each part of a data stream to be transmitted to its destination) within some upper bound. For example, to achieve good voice quality in a system carrying voice data across a network, delay across the network must be minimal.

The international telecommunications union (ITU-T) standard I.363.2 provides mechanisms to enforce an upper bound to the time within which any unfilled ATM cells should be dispatched across an ATM link, even if the cells are not yet filled with data. This standard relates to combining multiple ATM adaptation layer 2 (AAL2) coded packets into the cells of a single ATM connection. The packets being combined together may be multiplexed from multiple channels. The standard provides that each AAL2 coded ATM connection shall be equipped with a combined use (CU) timer which measures the delay interval starting at the time that the first data is placed in an ATM cell. A controller monitors the CU timer for each connection and causes any partially filled cell to be sent after a maximum predetermined delay has been reached. Cells which become completely filled before the maximum predetermined delay has been reached are sent without waiting for the maximum predetermined delay to elapse.

Since a separate timer is typically required for each connection, the number of timers required may be very large. For example, a channelized OC-3 interface might contain up to 2016 channels. If 10 channels are used for each AAL2 connection then there could be a need for as many as approximately 200 CU timers. Implementing such a large number of CU timers in a cost efficient and practical manner presents a significant problem. In some cases even more CU timers will be required.

There is a need for a way to efficiently and cost-effectively implement CU timers in apparatus for transmitting ATM cells according to standards such as ITU I.363.2. One object of the present invention is to provide a method for controlling the dispatch of data to a plurality of destinations on a telecommunication network which can be effectively used in cases where many CU timers are required.

More precisely, the invention provides a method for controlling the dispatch of data on a telecommunication network, the method comprising the steps of:
- receiving one or more data streams at an interface on the telecommunication network;
- accumulating data from the one or more data streams for each of a plurality of outgoing channels;
- upon the accumulation of a threshold amount of data for one of the outgoing channels, dispatching the accumulated data;
- if there is no accumulated data for an outgoing channel then upon the receipt of data for that outgoing channel which is not dispatched immediately, scheduling an expiry time for the outgoing channel and associating the outgoing channel with the expiry time; and,
- when the expiry time occurs, using the association to identify a group of one or more outgoing channels associated with the expiry time and, for the outgoing channels in the group, sending the accumulated data.

Thus, according to the invention, a device such as a combined use CU timer system establishes expiry times by which partially filled cells in each of a number of data streams should be transmitted. A record is kept of groups of one or more data streams which share the same expiry time. Upon the expiry time for a group of data streams being reached the partially-filled cells for the data streams in the group are sent. The invention facilitates tracking expiry times for a large number of data streams. Implementations of the invention may be used in sending AAL2 packets over ATM links according to the I.363.2 standard.

Associating the destination with the expiry time may comprise placing information identifying the destination in a list associated with the expiry time. In some embodiments the list comprises a linked list. In some embodiments the linked list comprises a doubly linked list.

Another aspect of the invention provides a method for controlling the transmission of fixed-sized data cells on a telecommunication link. The method comprises: receiving a plurality of data streams at an interface to the telecommunication link; assigning data from the data streams into fixed-size cells for transmission across connections in the telecommunication link; upon the creation of a partially-filled cell to be transmitted on a connection, scheduling an expiry time for the partially-filled cell and associating the connection with the expiry time; and, when the expiry time occurs, using the association to identify a group of one or more connections for which there are partially-filled cells all associated with the expiry time and dispatching the partially- filled cells in the group.

In some embodiments of the invention the telecommunication link comprises an ATM virtual channel connection and the fixed-size cells comprise ATM cells.

Yet another aspect of the invention provides apparatus for forwarding data packets over a telecommunication link. The apparatus comprises a plurality of interfaces, each interface receiving one or more streams of data and places the received data into data packets for transmission across a telecommunications link. The apparatus comprises a outgoing cell assembler connected to place data packets onto the telecommunications link and a combined use timer connected to control the transmission of partially- filled data packets over the telecommunications link. Each of the interfaces is configured to provide a partial packet ready signal to the combined use timer upon the creation of a partially-filled data packet containing less than a threshold amount of data. The combined use timer comprises a timer maintaining a current time value, a calculator connected to determine an expiry time for a partially-filled packet corresponding to a partial packet ready signal, a data structure capable of holding information identifying groups of partially-filled packets which share a common expiry time and comparison logic connected to signal to the outgoing cell assembler when the expiry time for a group of one or more partially- filled packets which share a common expiry time has occurred.

Further features and aspects of the invention are described below.

In drawings which illustrate non-limiting embodiments of the invention:
Figure 1 shows a schematic diagram of an ATM cell transmitting interface according to one of many possible embodiments of the invention;
Figure 2 shows a block diagram of a possible embodiment of a combined use timer system;
Figure 3 shows a diagram showing a data structure which could be used to track information regarding a connection;
Figure 4 shows a diagram illustrating a way to associate connections to expiry times using an expiry time list;
Figure 5 shows a diagram illustrating an ATM cell transmitting interface according to another embodiment of the invention;
Figure 6 shows a flow chart illustrating a method according to the invention; and,
Figure 7 shows a diagram illustrating an interface for transmitting variable-size packets according to the invention.

Throughout the following description, specific details are set forth in order to provide a more thorough understanding of the invention. However, the invention may be practiced without these particulars. In other instances, well known elements have not been shown or described in detail to avoid unnecessarily obscuring the invention. Accordingly, the specification and drawings are to be regarded in an illustrative, rather than a restrictive, sense.

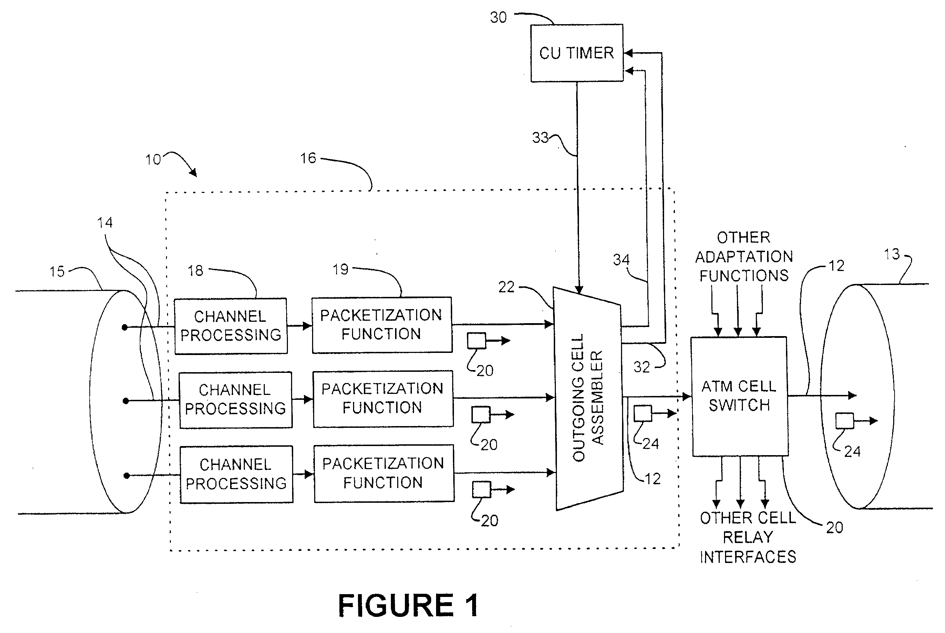

Figure 1 shows a block diagram of a system 10 according to one implementation of the invention. System 10 transmits data belonging to an outgoing channel over an ATM virtual connection 12 in a data link 13. Data link 13 may, for example, comprise a fiber optic cable, an electrical cable, a wireless ATM link, or the like. The nature of the physical layer is not particularly important to this invention. One or more streams 14 of data are received at an interface 16 of system 10 for transmission over ATM virtual connection 12.

System 10 comprises one or more additional interfaces 16 which are not shown in Figure 1. Each interface 16 handles data belonging to an outgoing channel. The data for each outgoing channel is passed on to some destination. The data for each outgoing channel may be destined for a certain connection, logical address, queue, path or the like. Multiple outgoing channels may have destinations on the same physical device. In Figure 1, data for the outgoing channel associated with interface 16 is carried toward its ultimate destination on ATM virtual connection 12.

In the illustrated embodiment, an interface 16 of system 10 receives a plurality of data streams 14 each comprising a separate time domain multiplexing (TDM) channel in an incoming data link 15. The source of data streams 14 is not particularly germane to this invention. Where multiple data streams 14 are received at system 10, the data streams may be received over separate physical data links or may be multiplexed on a single data link, as shown.

In Figure 1 the illustrated interface 16 has only three incoming data streams 14. In some implementations of the invention there may be many more incoming data streams 14. For example, there might be several hundred or even several thousand incoming data streams 14 by which data is received at interface 16.

Interface 16 receives the one or more incoming data streams 14 and provides an adaptation function. In the illustrated embodiment, interface 16 provides for each incoming data stream 14 a processing function 18, which may perform processing required by data of the data stream, and a packetization function 19, which places the data of the data stream 14 into AAL2 packets 20. AAL2 packets 20 are delivered to an outgoing cell assembler 22 which, in the illustrated embodiment also serves as a multiplexer. Outgoing cell assembler 22 places the AAL2 packets into ATM cells 24. There is typically not a one-to-one correspondence between AAL2 packets and ATM cells 24. Some AAL2 packets might fit entirely in one ATM cell 24 others might be split between two or more ATM cells 24.

ATM cells 24 are carried on ATM virtual connection 12. ATM virtual connection 12 is combined with other ATM virtual connections from other adaptation functions in ATM cell switch 20 for transmission over data link 13.

When outgoing cell assembler 22 has a filled ATM cell 24 it sends the ATM cell 24 on ATM virtual connection 12. Outgoing cell assembler 22 defers sending ATM cells 24 which are not filled. A CU timer system 30 causes outgoing cell assembler 22 to send ATM cells 24, even if they are still only partially filled, before the data in the partially- filled ATM cells 24 is delayed excessively. When outgoing cell assembler 22 has a partially filled ATM cell 24, it generates a partial cell available signal 32 which it sends to CU timer system 30. CU timer system 30 is common to a plurality of interfaces 16. Interfaces 16 may share common hardware elements.

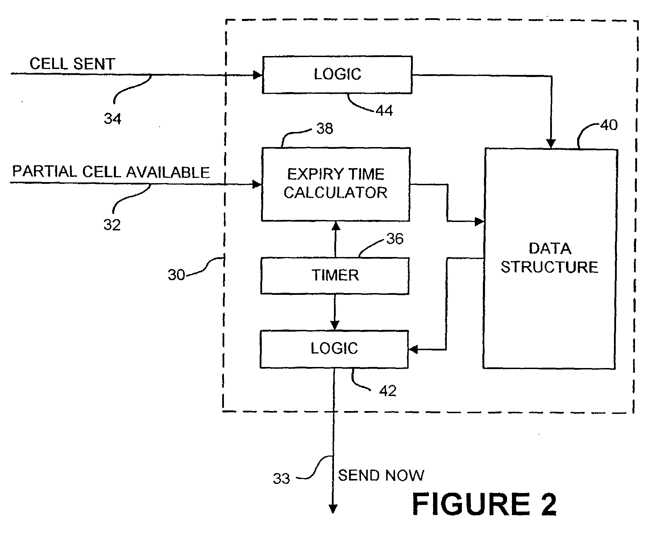

As shown in Figure 2, CU timer system 30 comprises a timer 36 and an expiry time calculator 38. In response to the receipt of a partial cell available signal 32 from outgoing cell assembler 22 expiry time calculator 38 establishes a time by which the cell being filled by outgoing cell assembler 22 should be transmitted, even if it is still not full. The time may be established, for example, by adding an amount to the current value of the time maintained by timer 36. The amount may be, for example, a fixed amount or an amount specified by a value which may be independently configured for each interface 16 or each ATM virtual connection 12. A data structure 40 is used to keep track of the expiry time(s) for any interfaces 16 from which a partial cell available signal 32 has been received.

Logic 42 identifies those partially filled ATM cells 24 referenced in data structure 40 which have an expiry time equal to the current time maintained by timer 36. Logic 42 generates a send packet signal 33 to the appropriate outgoing cell assembler 22 which causes outgoing cell assembler 22 to forward its partially filled ATM cell 24 immediately for transmission on ATM virtual connection 12. Outgoing cell assembler 24 may pad the unfilled portion of the payload of the ATM cell 24 with, for example, zeros.

System 10 preferably comprises a means for removing from data structure 40 references to ATM cells 24 which become filled after a partial cell available signal 32 has been generated but before their expiry times. In preferred embodiments of the invention, each of interfaces 16 is configured to generate a cell sent signal 34. Cell sent signal 34 is generated when a partially filled ATM cell 24 becomes filled and can therefore be sent without delay. CU timer system 30 receives the cell sent signals 34. Upon receipt of a cell sent signal 34, logic 44 in CU timer system 30 deletes reference to the cell from data structure 40.

Data structure 40 preferably comprises a record which identifies each partially filled ATM cell 24 for which an expiry time has been set. The record preferably associates together the records of those partially filled ATM cells 24 whose expiry times are the same (or fall within the same window). Data structure 40 may comprise a series of lists, each list containing a record of all ATM virtual connections which comprise partially filled ATM cells 24 that are scheduled to expire at the same expiry time. Each list may be implemented, for example, as a linked list.

At each time increment, logic 42 retrieves from data structure 40 information identifying any ATM cells 24 which should be transmitted at that time increment. For each cell that is scheduled to be transmitted at that time increment, logic 42 generates and delivers to the appropriate outgoing cell assembler 22 a send now signal 33 indicating that the ATM cell 24 should be transmitted without further delay.

Typically, at any point in time, there will be a relatively small number of possible expiry times outstanding. For example, if the maximum CU timer range is 64 milliseconds (i.e. every packet should be transmitted, at worst, within 64 milliseconds) and the timer increment is 0.5 milliseconds then the number of potential expiry times is only 128. Therefore, only a relatively small number of expiry time lists need to be kept. Data structure 40 can therefore be conveniently held in a relatively small memory.

CU timer system 30 may be implemented, for example, in an application specific integrated circuit (ASIC) or in a field programmable gate array (FPGA). CU timer system 30 may comprise a number of discrete memory components or regions, with one memory component or region set aside for each potential expiry time. In the alternative, CU timer system 30 could include one or more memories which each include lists of partially filled ATM cells 24. One list is provided for each distinct expiry time or window. CU timer system 30 may include a single memory for holding all of data structure 40.

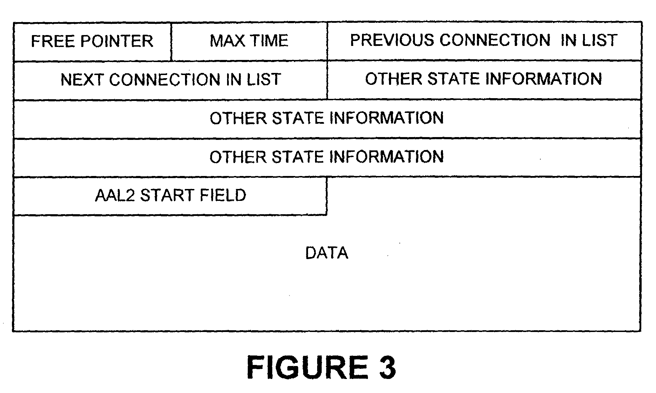

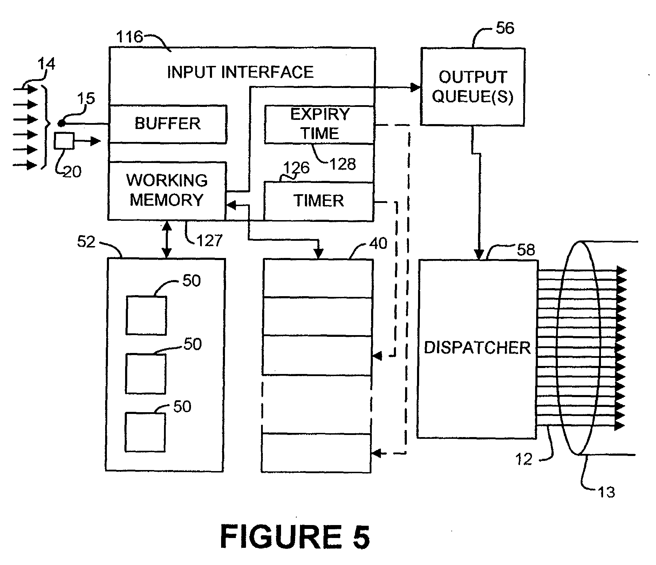

Figures 3, 4 and 5 illustrate a specific embodiment of the invention. As shown in Figure 5, an interface 116 comprising control logic circuits receives packets 20 arising from one or more data streams 14 on an incoming data link 15. Data in each of the data streams is destined for an outgoing channel carried by one of a plurality of ATM virtual connections 12. Each data stream 14 may comprise a series of data packets. The data packets could, for example, comprise coded voice information, coded video information, segmented ethernet packets, segmented IP packets, or packets in some other format.

For each ATM connection (data for each outgoing channel is carried on a separate ATM connection in this example) a record 50 as shown in Figure 3 is maintained in a suitable memory 52. Upon receiving a packet, interface 116 inspects the packet's header to determine which ATM virtual connection it should be forwarded to. Interface 116 then selects the instance of record 50 for that ATM virtual connection. Interface 116 may load the instance of record 50 into a working memory 127.

In this embodiment of the invention, each record 50 includes several fields including the following:
- DATA - an area in which data from the data stream is assembled for inclusion in an ATM cell;
- FREE POINTER - a pointer to the next available space in the DATA area;
- NEXT CONNECTION IN LIST - this field may contain a pointer to a next record 50 for an ATM connection which has a partially filled cell having the same expiry time as the cell of the ATM connection corresponding to the current record 50;
- PREVIOUS CONNECTION IN LIST - this field may contain a pointer to a previous record 50 for an ATM connection which has a partially filled cell having the same expiry time as the cell of the ATM connection corresponding to the current record 50;
- MAX TIME - the maximum time which data for the corresponding ATM connection should be allowed to wait before being forwarded;
- OTHER STATUS INFORMATION - may contain various information specific to the implementation.

Upon receiving data destined for a particular ATM virtual connection 12, interface 116 loads the appropriate record 50 into working memory 127 and then begins assembling the received data into the DATA area. In the illustrated embodiment the first byte of the DATA area is taken up with an AAL2 START FIELD which includes information about the ATM cell such as an OSF (offset), SN (sequence number) and P (parity) fields as defined in the I.363.2 standard. When the DATA area contains enough data to fill an ATM cell, interface 116 creates an ATM cell and places the completed ATM cell into an appropriate one of output queue(s) 56.

When interface 116 has a partially filled ATM cell in the DATA area for the current record 50 and there is no more data immediately available to fill the ATM cell then interface 116 computes an expiry time for the partially filled cell by adding the value in the MAX TIME field to the current value maintained by timer 126. The resulting expiry time is used to store a reference to the current record 50 in CU timer memory 40.

In the illustrated embodiment of the invention, CU timer memory 40 comprises a location corresponding to each possible upcoming expiry time. Each bcation in CU timer memory 40 can hold information identifying a record 50 corresponding to an ATM connection for which there is a partially filled cell having an expiry time corresponding to the location. The information may comprise, for example, a pointer to the location of the record 50 in memory 52. Where the current record 50 corresponds to an ATM connection for which there is a partially filled packet, interface 116 writes information identifying the current record 50 to the location in CU timer memory 40 corresponding to the expiry time for the partially filled packet. If there is already another data stream referenced at that location in CU timer memory 40 (i.e. a previously processed ATM connection has a partially filled ATM cell which shares the same expiry time) then interface 116 copies the pointer to the record 50 of the previously processed connection to the NEXT CONNECTION IN LIST field of the current record 50.

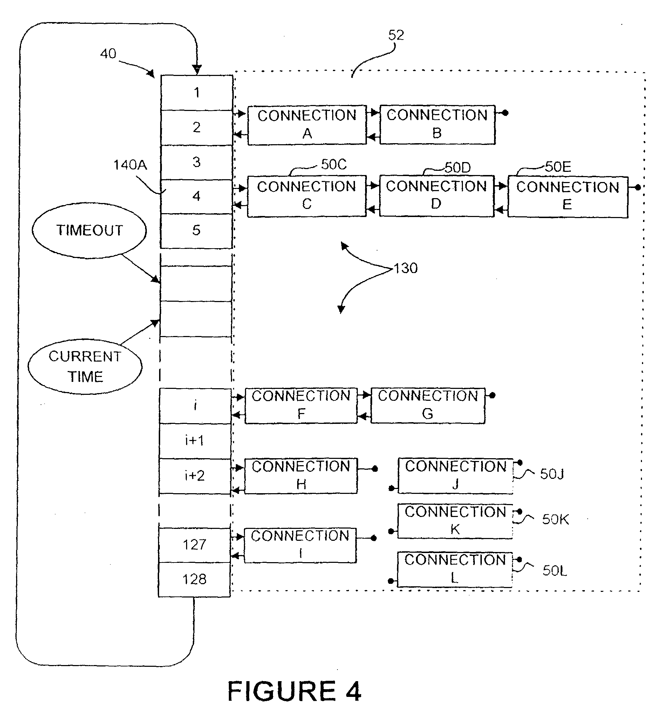

As this process is repeated for different connections, linked lists 130 (Figure 4) are built up. Each linked list contains references to those ATM connections which have partially filled ATM cells having the same expiry time. The head of each linked list is a location in CU timer memory 40 which corresponds to the expiry time.

For purposes of removing references to connections from the linked lists, each linked list is preferably a doubly-linked list. In the illustrated embodiment, when a location in CU timer memory 40 includes a pointer to a previously inserted record 50 then interface 116 writes a pointer to the current record 50 in the PREVIOUS CONNECTION IN LIST field of the previously inserted record 50. Figure 4, shows an example in which CU timer memory 40 is tracking 5 groups each containing one or more ATM connections which share the same expiry time. Each of these groups is represented by a doubly linked list 130.

For example, location 140A of CU timer memory 40 contains a pointer to the record 50C for a connection "C". In memory structure 50C the PREVIOUS CONNECTION IN LIST field contains a pointer to location 140A of CU timer memory 40, the NEXT CONNECTION IN LIST field contains a pointer to the record 50D for a connection "D". In record 50D the PREVIOUS CONNECTION IN LIST field contains a pointer to record 50C and the NEXT CONNECTION IN LIST field contains a pointer to the record 50E for a connection "E". In record 50E the PREVIOUS CONNECTION IN LIST field contains a pointer to record 50D and the NEXT CONNECTION IN LIST field contains a null pointer.

Memory 52 may contain records 50 for ATM connections which do not have partially filled packets. For example, Figure 4 shows records 50J, 50K, and 50L which are not linked directly or indirectly to any location in CU timer memory 40. In these records 50 both the PREVIOUS CONNECTION IN LIST field and the NEXT CONNECTION IN LIST field may contain null pointers.

During operation of interface 116, timer 126 tracks the current time. A current time pointer (Fig. 4) identifies the location in CU timer memory 40 which corresponds to the current time. A timeout pointer (Fig. 5) may also be provided. The timeout pointer typically points to the same location in CU timer memory 40 as the current time pointer. The timeout pointer points to the location in CU timer memory 40 to which any records 50 which are currently being processed are linked.

The current time pointer and timeout pointer move sequentially through the locations of CU timer memory 40. It takes some time to process each record 50. When a large number of connections have cells expiring at the same or closely spaced expiry times the timeout pointer may lag behind the current time pointer by one or more locations in CU timer memory 40. Where there is sufficient processing capacity to process all connections which could expire at any particular expiry time before the next expiry time then a timeout pointer is not required.

When the timeout pointer moves to a location in CU timer memory 40, interface 116 checks to see if that location holds a pointer to a record 50. If not, there are no partially filled ATM cells which have expiry times which require them to be sent immediately. If there is a pointer to a record 50 then interface 116 retrieves the pointed-to record 50 from memory 52 and places the data in it into an ATM cell in an output queue 56. Interface 116 continues to send unfilled ATM cells for all of the connections having records 50 identified in the linked list 130 having its head at the location in CU timer memory 40 which is pointed to by the timeout pointer. When this has been completed then a null pointer is inserted into the location in CU timer memory 40. If the timeout pointer is not pointing to the same location in CU timer memory 40 as the current time pointer, and there are no records 50 pointed to by the location in CU timer memory 40 identified by the timeout pointer, then the timeout pointer moves to the next location in CU timer memory 40 and the steps described in this paragraph are repeated.

Sometimes a partially filled ATM cell will be filled by newly received data before its expiry time. If this occurs then it is desirable to send the cell immediately and to remove reference to the connection to which the cell belongs from the linked list corresponding to the cell's expiry time. Interface 116 can accomplish this by retrieving the record 50 for the data stream and identifying all pointers to that record 50 in the doubly linked list 130. This can be done by identifying:
- from the PREVIOUS CONNECTION IN LIST field the location in CU timer memory 40 (or record 50) which points to that record; and,
- from the NEXT CONNECTION IN LIST field any next record 50 in the doubly linked list 130.
Interface 116 can then modify the doubly linked list by replacing the pointer to the current record 50 from the direction of the head of the list with a pointer to the next record 50 in the doubly linked list, if any (or with a null pointer if there is no next record 50 in the doubly linked list). If there is a next record 50 in the doubly linked list then interface 116 modifies the PREVIOUS CONNECTION IN LIST field for the next record 50 to be the same as the PREVIOUS CONNECTION IN LIST field for the current record 50.

For example, if an unfilled ATM cell for CONNECTION D of Figure 4 became filled before the timeout pointer pointed to location 140A then it would become necessary to remove record 50D from the linked list 130 to which it belongs. This can be done by modifying record 50C so that its NEXT CONNECTION IN LIST field points to record 50E and modifying record 50E so that its PREVIOUS CONNECTION IN LIST field points to record 50C. The NEXT CONNECTION IN LIST field and PREVIOUS CONNECTION IN LIST field for record 50D can then be set to null pointers.

The apparatus of Figure 5 may be implemented in an application specific integrated circuit ASIC or an FPGA. It is convenient to include working memory 127 and CU timer memory 40 in the ASIC or FPGA. Memory 52 may comprise an external memory, for example, an SRAM memory.

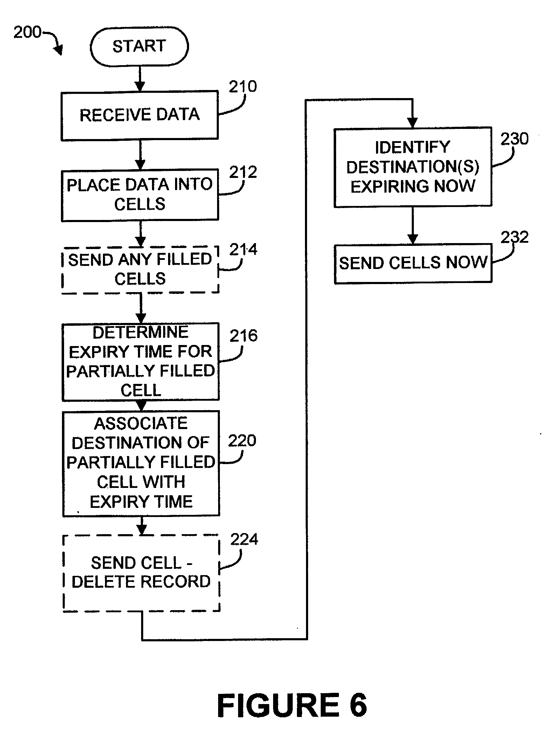

Figure 6 illustrates a method 200 according to the invention. Method 200 receives data for a plurality of data streams at an interface to a telecommunication link (block 210). At block 212 the data is placed into cells for transmission across specific channels in the telecommunication link. Block 214 sends any filled cells across the corresponding channel in the telecommunication link (block 214 may comprise placing the filled cells into a queue or queues for transmission across the telecommunication link). Block 216 determines an expiry time for any partially filled cells.

In block 220 a record is made associating the connection over which the partially filled cell will be sent with the expiry time determined in block 216. If the partially filled cell becomes filled before the expiry time then in block 224 the filled cell is sent and the record previously made in block 220 is deleted. Upon the expiry time being reached, the record made in block 220 is used to identify the connection with which the partially filled cell is associated together with any other connections having partially filled cells sharing the same expiry time (block 230). Then the group of one or more partially filled cells which share the expiry time are sent on the appropriate connections (block 232).

Those skilled in the art will appreciate that the application of this invention is not limited to sending AAL2 data packets over ATM connections. The invention provides a general method for controlling the dispatch of data onto multiple connections in one or more telecommunication links where it is desirable that:
- the data should preferably be dispatched in packets or cells of at least a minimum preferred size; and,
- the data should be dispatched within a maximum time after it is received even if there is not enough data to fill a packet or cell to at least the minimum preferred size.
The packets or cells may comprise fixed-size cells, variable sized packets, or the like.

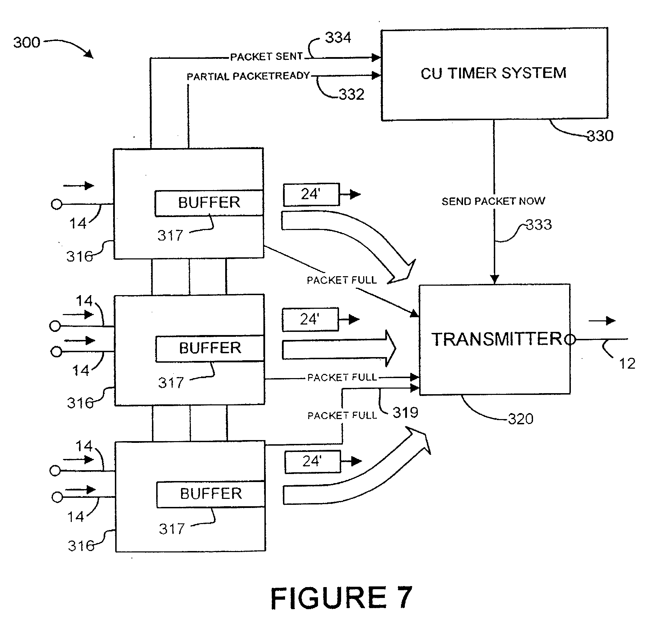

Figure 7 illustrates apparatus 300 according to one of many possible alternative embodiments of the invention. Apparatus 300 comprises a plurality of interfaces 316 which each receive data from one or more sources 14. An interface 316 is provided for each of a plurality of outgoing channels. The way in which data 14 arrives at interfaces 316 and the format in which data 14 arrives at interfaces 316 is implementation-specific. At each interface 316 data is held in a buffer 317 in preparation for dispatching to a destination in the form of data packets 24'. Data packets 24' may comprise fixed-size cells, fixed size data frames, variable-size packets. Each interface 316 constitutes an outgoing packet assembler (which could also be termed an outgoing cell assembler in cases where packets 24' comprise cells). A transmitter 320 retrieves from interfaces 316 and forwards data packets 24' when they are ready for sending. A data packet 24' is ready for sending when it either: contains more than a threshold amount of data; or contains data for which an expiry time has been reached.

When data arrives at an interface 316 it is placed into buffer 317. If there is at least a threshold amount of data in buffer 317 then interface 316 causes a PACKET FULL signal 319 to be sent to transmitter 320. Transmitter 320 retrieves and transmits packets 24' from the interface 316 as long as the PACKET FULL signal is asserted. When data which will start a new packet 24' but will leave the new packet 24' with less than a threshold amount of data arrives at interface 316 then interface 316 causes a PARTIAL PACKET ready signal 332 to be sent to CU timer system 330. The PARTIAL PACKET READY signal may be sent, for example, when:
- buffer 317 is empty when the data arrives at interface 316 and the amount of data which arrives at the interface is less than the threshold amount;
- buffer 317 is empty when the data arrives at interface 316, the amount of data which arrives at the interface is more than enough to completely fill one or more packets 24', and leave data left over in an amount less than the threshold amount;
- buffer 317 already contains some data and enough data arrives at interface 16 so that the combination of the data already present in buffer 317 and the newly-arrived data is more than enough to completely fill one or more packets 24', and leave data left over in an amount less than the threshold amount.

CU timer system 330 may function in substantially the same way as the CU timer system 30 shown in Figure 2.

Upon the expiry time for the data of any one of interfaces 316, CU timer system delivers a SEND PACKET NOW signal 333 to transmitter 320. The SEND PACKET NOW signal identifies the interface 316 for which the data should be sent (even though the threshold amount of data may not be available at that interface). Transmitter 320 then dispatches a packet 18 containing whatever data is present in buffer 317 of the interface 316.

Where a packet is sent from an interface 316 before the expiry time of data in the packet then interface 316 causes a packet sent signal 334 to be delivered to CU timer system 330.

Where a component (e.g. an assembly, device, memory, etc.) is referred herein, unless otherwise indicated, reference to that component (including a reference to a "means") should be interpreted as a reference to any component which performs the function of the described component (i.e. is functionally equivalent to the described component), including components which are not structurally equivalent to the disclosed structure which performs the function in the illustrated exemplary embodiments of the invention. Where a step in a method is referred to above, unless otherwise indicated, reference to that step should be interpreted as a reference to any step which achieves the same result as the step (i.e. is functionally equivalent to the described step), including steps which achieve a stated result in different ways from those disclosed in the illustrated exemplary embodiments of the invention.
As will be apparent to those skilled in the art in the light of the foregoing disclosure, many alterations and modifications are possible in the practice of this invention without departing from the spirit or scope thereof. For example:
- While the invention has been described as working to adapt AAL2 packets to ATM cells the invention could be applied in other situations where it is desirable to ensure that partially filled cells or packets are sent within a maximum time;
- While Figure 1 shows separate incoming and outgoing data links, incoming data link 15 and outgoing data link 13 could be carried on the same physical layer in certain implementations;
- The cells being sent are not necessarily ATM cells, the invention could be applied to sending other types of data cells or packets;
- The invention could be used to terminate placing data into a variable-length packet and to dispatch the packet at its current size if a maximum time period has elapsed since the first data was allocated to the packet;
- Where the invention is applied to the dispatch of variable-length packets the threshold amount of data may be either less than the maximum amount of data which can be carried by a packet or equal to the maximum amount of data which can be carried by a packet;
- While the invention has been illustrated as working with a plurality of data streams which are multiplexed into each outgoing channel the invention may also be applied in circumstances where there is only a single data stream for each outgoing channel;
- While the foregoing has described the application of expiry timers to connections, it is not necessary that there be any connections, either physical or virtual present. The invention could be applied to dispatching data over a network which is not connection-based. A CU timer system as described herein may be applied to any flow(s) of data destined for one or more common endpoints identified by destination addresses, paths which lead toward endpoints, or the like;
- While the embodiment of Figures 3, 4 and 5 uses records 50 associated with each connection both to keep track of information related to the status of the connection and to keep track of the associations of individual connections with specific expiry times, it would be possible to separate these functions;
- The invention could be implemented in software or hardware or a combination of software and hardware;
- The various functional components illustrated in the drawings may be combined with one another in different ways.
Accordingly, the scope of the invention is to be construed in accordance with the substance defined by the following claims.

## Claims

1. Method for controlling the dispatch of data on a telecommunication network, the method comprising:
receiving one or more data streams at an interface on the telecommunication network;
accumulating data from the one or more data streams for each of a plurality of outgoing channels;
upon the accumulation of a threshold amount of data for one of the outgoing channels, dispatching the accumulated data;
if there is no accumulated data for an outgoing channel then upon the receipt of data for that outgoing channel which is not dispatched immediately, scheduling an expiry time for the outgoing channel and associating the outgoing channel with the expiry time; and,
when the expiry time occurs, using the association to identify a group of one or more outgoing channels associated with the expiry time and, for the outgoing channels in the group, sending the accumulated data.

2. Method of claim 1 wherein associating the outgoing channel with the expiry time comprises placing information identifying the outgoing channel in a list associated with the expiry time.

3. Method of claim 2 wherein the list is a linked list and associating the outgoing channel with the expiry time comprises placing a pointer to a record associated with the outgoing channel into the linked list.

4. Method of claim 2 or claim 3 comprising, upon dispatching the accumulated data for an outgoing channel before the expiry time, deleting from the list the association of the outgoing channel with the expiry time.

5. Method of claim 4 wherein the list comprises a doubly- linked list and deleting from the list the association of the outgoing channel with the expiry time comprises retrieving information identifying a previous outgoing channel in the doubly linked list and a next outgoing channel in the doubly linked list from a record associated with the outgoing channel,.

6. Method according to any one of claims 1 to 5 wherein dispatching the accumulated data comprises dispatching one or more fixed-size cells.

7. Method of claim 6 wherein the threshold amount of data is an amount of data required to fill one of the fixed-size cells.

8. Method of claim 6 or claim 7 wherein data for each outgoing channel is carried by a connection on an ATM telecommunication link and the fixed-size cells are ATM cells.

9. Method according to any one of claims 1 to 8 wherein receiving a plurality of data streams at an interface comprises receiving data frames at the interface and accumulating data destined for each of the plurality of outgoing channels comprises encapsulating the data frames for an outgoing channel according to an ATM adaptation layer protocol.

10. Method according to any one of claims 1 to 9 wherein dispatching the accumulated data comprises sending one or more variable-size packets.

11. Method of claim 10 wherein the threshold amount of data is less than a maximum amount of data capable of being carried by one of the variable-size packets.

12. Method of claim 10 wherein the threshold amount of data is equal to a maximum amount of data capable of being carried by one of the variable-size packets.

13. Method according to any one of claims 1 to 12 comprising providing a CU timer memory comprising a plurality of locations, each of the locations corresponding to a possible expiry time wherein associating the outgoing channel with the expiry time comprises associating a record associated with the outgoing channel with one of the locations in the CU timer memory corresponding to the expiry time for the outgoing channel.

14. Method of claim 13 wherein associating a record associated with the outgoing channel with one of the locations in the CU timer memory comprises placing a pointer to the record in the one of the locations in the CU timer memory.

15. Method according to any one of claims 1 to 12 wherein the method comprises providing a CU timer memory comprising a plurality of locations, each of the locations corresponding to a possible expiry time wherein associating the outgoing channel with the expiry time comprises placing a pointer to a record associated with the outgoing channel into a linked list associated with one of the locations in the CU timer memory corresponding to the expiry time.

16. Method of claim 15 wherein using the association to identify a group of one or more outgoing channels associated with the expiry time comprises traversing a linked list beginning at the location in the CU timer memory corresponding to the expiry time.

17. Method for controlling the transmission of fixed-sized data cells on a telecommunication link, the method comprising:
receiving one or more data streams at an interface to the telecommunication link;
assigning data from the data streams into fixed-size cells for transmission across connections in the telecommunication link;
upon the creation of a partially-filled cell to be transmitted on a connection, scheduling an expiry time for the partially-filled cell and associating the connection with the expiry time; and,
when the expiry time occurs, using the association to identify a group of one or more connections for which there are partially-filled cells all associated with the expiry time and dispatching the partially- filled cells in the group.

18. Method of claim 17 wherein associating the connection with the expiry time comprises placing information identifying the connection in a list associated with the expiry time.

19. Method of claim 18 wherein the list is a linked list and associating the connection with the expiry time comprises placing a pointer to a record associated with the connection into the linked list.

20. Method according to any one of claims 17 to 19 wherein sending the partially-filled cells comprises providing an indication that the identified partially-filled cells should be transmitted without further delay.

21. Method according to any one of claims 17 to 20 comprising, upon filling a partially- filled cell before the expiry time, dispatching the cell and deleting the association of the connection with the expiry time.

22. Method of claim 21 wherein associating the connection with the expiry time comprises inserting a record identifying the connection into a doubly linked list associated with the expiry time and deleting the association of the connection with the expiry time comprises removing the record from the doubly linked list.

23. Method according to any one of claims 17 to 22 wherein the telecommunication link comprises an ATM link and the fixed-size cells comprise ATM cells.

24. Method according to any one of claims 17 to 23 comprising in a CU timer memory having areas corresponding to each of a plurality of possible expiry times associating the connection with the expiry time by placing information identifying the connection into an area in the CU timer memory corresponding to the expiry time.

25. Method of claim 24 wherein placing information identifying the connection into an area in the CU timer memory comprises placing a pointer to a head of a list of one or more records, including a record associated with the connection, into the area in the CU timer memory corresponding to the expiry time.

26. Method of claim 25 wherein the list comprises a linked list.

27. Method of any one of claims 24 to 26 wherein using the association to identify a group of one or more connections having partially-filled cells all associated with the expiry time comprises traversing a linked list beginning at the location in the CU timer memory corresponding to the expiry time.

28. Method of claim 27 comprising maintaining a record for each of the plurality of connections wherein the record comprises a field capable of holding a pointer to a next one of the records and traversing the linked list comprises retrieving from the location in the CU timer memory a pointer to a first record associated with a first connection and retrieving from the field of the first record a pointer to a second record associated with a second connection having the same expiry time.

29. Method according to any one of claims 17 to 28 comprising maintaining a CU timer memory having a location associated with each of a plurality of possible expiry times wherein associating the connection with the expiry time comprises placing information identifying the connection into a list associated with the location in the CU timer memory corresponding to the expiry time.

30. Method of claim 29 wherein the list comprises a linked list.

31. Method of claim 30 wherein the linked list comprises a doubly-linked list.

32. Apparatus for forwarding data packets belonging to a plurality of outgoing channels, each outgoing channel carrying data from one or more streams of data, over a telecommunication link the apparatus comprising:
a outgoing packet assembler connected to place data packets onto the telecommunications link and a combined use timer connected to control the transmission of partially-filled data packets over the telecommunications link, the outgoing packet assembler being configured to provide a partial packet ready signal to the combined use timer upon the creation of a partially-filled data packet containing less than a threshold amount of data;
the combined use timer comprising a timer maintaining a current time value, a calculator connected to determine an expiry time for a partially- filled packet corresponding to a partial packet ready signal, a data structure capable of holding information identifying groups of partially-filled packets which share a common expiry time and comparison logic connected to signal to the outgoing packet assembler when the expiry time for a group of one or more partially- filled packets which share a common expiry time has occurred.

33. Apparatus of claim 32 wherein the data packets comprise fixed-size cells.

34. Apparatus of claim 33 wherein the threshold amount of data is an amount of data equal to a data payload of one of the fixed-size cells.

35. Apparatus according to any one of claims 32 to 34 wherein the outgoing packet assembler is connected to provide a packet sent signal when a previously created partially-filled packet is transmitted and the combined use timer comprises means for removing reference to the previously created partially-filled packet from the data structure in response to the packet sent signal.

36. Apparatus according to any one of claims 32 to 35 wherein the outgoing packet assembler is connected to provide a packet sent signal when a previously created partially-filled packet is transmitted and the combined use timer comprises means for inhibiting the comparison logic from generating a signal relating to packets for which packet sent signals have been received.

37. Apparatus according to any one of claims 32 to 36 wherein the data structure comprises a plurality of lists, one of the lists corresponding to each of a plurality of possible expiry times.

38. Apparatus of claim 37 wherein the lists comprises linked lists.

39. Apparatus of claim 38 wherein the linked lists comprise doubly linked lists.

40. Apparatus according to any one of claims 32 to 39 comprising an interface system comprising control logic, a memory holding a plurality of records, the records containing information regarding states of each of the plurality outgoing channels and a working memory wherein the control logic is configured to load into the working memory a current one of the records.

41. Apparatus of claim 40 wherein each of the records comprises a previous connection in list field capable of holding a pointer identifying a previous record in one of the doubly-linked lists and a next connection in list field capable of holding a pointer identifying a next record in the doubly linked list, each of the doubly linked lists comprises a set of zero or more records, and the records in any of the sets comprising two or more of the records are linked by pointers in their next connection in list and previous connection in list fields.

42. Apparatus according to any one of claims 33 to 41 comprising means for encapsulating received data according to an ATM adaptation layer protocol prior to placing the received data into the fixed-sized data packets.

43. Apparatus according to any one of claims 32 to 42 comprising a CU timer memory comprising a plurality of locations, each of the locations corresponding to a possible expiry time, each of the locations associated with a set of zero or more of the outgoing channels which have partially filled packets having expiry times matching the possible expiry time of the location.

44. Apparatus of claim 43 wherein each of the locations in the CU timer memory is capable of holding a pointer identifying a record corresponding to a outgoing channel in a set of the outgoing channels which have partially filled packets having expiry times matching the possible expiry time of the location.

45. Apparatus according to any one of claims 32 to 44 wherein the threshold is smaller than a maximum data payload of one of the data packets.

46. Apparatus according to any one of claims 32 to 44 wherein the threshold is equal to a maximum data payload of one of the data packets.
